# EUROPEAN PATENT SPECIFICATION

(11) **EP 3 264 336 B1**
(45) Date of publication and mention of the grant of the patent: **30.12.2020**
(21) Application number: 16855359.2
(22) Date of filing: 07.10.2016
(51) Int. Cl.: B32B 38/00, B32B 15/08, B42D 25/455, G06K 19/06, G06K 1/12, B29C 33/00

(54) **IDENTIFICATION PLATE AND METHOD FOR MANUFACTURING SAME**
IDENTIFIKATIONSSCHILD UND VERFAHREN ZUR HERSTELLUNG DAVON
PLAQUE D'IDENTIFICATION ET SON PROCÉDÉ DE FABRICATION

(30) Priority: 14.10.2015 JP 2015203087
(43) Date of publication of application: 03.01.2018
(73) Proprietor: Knowledge Manufacturing Company, Kawasaki-shi, Kanagawa 213-0012 (JP)
(72) Inventor: TAKASE, Atsuhiko, Kawasaki-shi Kanagawa 213-0012 (JP); ABE, Shinichi, Kawasaki-shi Kanagawa 213-0012 (JP); SATO, Seiki, Kawasaki-shi Kanagawa 213-0012 (JP)
(74) Representative: Markfort, Iris-Anne Lucie
(86) International application number: PCT/JP2016/079924
(87) International publication number: WO 2017/065105

(56) References cited:
- WO-A1-2010/101037
- WO-A2-2015/026612
- GB-A- 2 436 634
- JP-A- 2002 304 734
- JP-A- 2002 350 211
- JP-U- H01 120 272

## Description

### Technical Field

The present invention relates to an identification plate attached to a die, for example, and a method for manufacturing the same.

### Background Art

In recent years, many products tend to be of various types, have short lifetimes, and produced in small lots in response to diversified user directivities. Moreover, local production for local consumption is being promoted also in a global viewpoint, and many products are tend to be developed by country and region so as to further increase varieties. As a result, the number of dies inevitably increases, and management of production equipment and dies/jigs as well as management of products and components become complicated.

In practice, dies are usually stored 7 years for electric products and the like, 15 years for automobiles, and 30 years for energy-related products after discontinuation of those products. Manufacturers are responsible for supply of spare components (service parts) even after discontinuation of the products, and storage of dies thereof is indispensable and managed by management departments or purchasing departments based on a "ledger".

Further, production bases are recently being transferred from overseas to domestic, and in this case, there are a die manufacturer, die data, the number of production shots, die maintenance information, a location, and the like as production technology information requisite for the transfer of production bases. As production/equipment information, manufacturing condition data such as a molding condition, a production machine/jig specification, production line data, maintenance information of equipment and the like, quality information, and production environment information such as a power supply, temperature, and humidity also become necessary. Furthermore, management information such as a QC process chart, a task manual, and an inspection manual is also necessary, and transfer of the die/equipment and all of those pieces of production technology information becomes a big deal and cannot be accomplished easily.

Incidentally, an important matter in die management is individual recognition of a die and die components thereof. Normally, engraved marking with paint or engraved marking by a punch is mainly used for die identification. However, regarding the storage of dies, the die may be left out in the open in a case of a large die and piled up in warehouses in a case of a small- to medium-size die and may not necessarily be stored in a favorable environment, with the result that characters may disappear or become unrecognizable by rust.

In this regard, there is proposed a technology of attaching, to a die, a die identification plate that has excellent light resistance, resistance to rust, scratches, and impact, and chemical resistance in die washing and the like and has durability that can assure 10 to 20 years. Further, nowadays, there is an increasing need for a new die identification plate to which a QR code (registered trademark) is attached as a 2-dimensional code so as to enable die-related production technology information and asset management information to be recognized in attributes.

Regarding such an identification plate to which a QR code (registered trademark) is attached, Non-patent Literature 1 discloses a technology called Metalphoto (registered trademark). Moreover, Non-patent Literature 2 discloses an identification plate subjected to metal engraved marking using fiber laser.

### Citation List

### Patent Literature

Non-patent Literature 1: http://www.toka.co.jp/modules/tk/index.php?id=1
Non-patent Literature 2: http://www.t-pla.co.jp/processing.html#metal

WO 2010/101037 A1 discloses an indicator effective in preventing a commodity from being mislabeled, and an information management system using the indicator. A detection portion for preventing mislabeling is provided in an indicator. The detection portion comprises, for example, a character string formed by laser-cutting a recognition mark unique to a commodity. A bridge portion for preventing an island portion from dropping out is provided in the character string, and weakened by designing the width of the bridge portion small. If the indicator is attempted to be peeled off, a displacement such as a fracture or a breakage occurs in a weakened portion, and thus the reuse of the indicator becomes impossible. In an information management system, a database in a server can be accessed by a portable terminal via a network, but if there is a displacement in the weakened portion, the access to the database of the commodity to which a label is affixed is blocked. Thus, the reuse of the indicator and mislabeling of the commodity can be completely prevented.

WO 2015/026612 A2 discloses a method for forming an information carrying card or a core layer of an information carrying card using a radiation curing, and an apparatus configured to provide such a radiation curing. The method includes providing a carrier layer that defines at least one cavity, providing an inlay layer supporting at least one electronic component, and positioning at least a portion of the inlay layer in the at least one cavity. The method further comprises dispensing a radiation crosslinkable polymer composition over the inlay layer, and irradiating the radiation crosslinkable polymer composition.

### Disclosure of Invention

### Technical Problem

The technology described in Non-patent Literature 1 is an application of a photograph technique, so processes become complex. Consequently, since it requires time in manufacturing and a mask is necessary, this technology is unsuited for the die identification plate that requires a QR code for each individual.

In contrast, the identification plate subjected to metal engraved marking using fiber laser realizes simple processes and a short manufacturing time and can be used for a die that requires a QR code for each individual. However, since dust, oil, and the like adhere onto the identification plate in an environment where the die is used or stored in many cases and the dust and oil are apt to be accumulated in the engraved concave portion in this case, there is a fear that a recognition rate of the QR code (registered trademark) will be lowered.

In view of the circumstances as described above, the present invention aims at providing an identification plate that enables a 2-dimensional code of each individual to be attached by a simple process and can be produced in a short time, and with which a recognition rate of the 2-dimensional code is not lowered, and a method of manufacturing the same. Solution to Problem

To attain the object described above, an identification plate according to an embodiment of the present invention comprises the features of claim 1, namely an identification plate to be attached to an object, including: an identification plate body formed of metal; and a display area having a concave portion that corresponds to a 2-dimensional code provided on a front surface of the identification plate body. According to the invention a transparent inorganic-organic composite paint layer is provided that has heat resistance, covers a front surface of the display area, and fills the concave portion. According to the invention the 2-dimensional code corresponds to information related to the object.

In the embodiment of the present invention, the inorganic-organic composite paint layer has heat resistance of 70° to 200°.

In the embodiment of the present invention, the identification plate body is formed of aluminum, and the identification plate further includes an alumite layer provided on the front surface of the display area while avoiding the concave portion.

A manufacturing method according to an embodiment of the present invention comprises the features of claim 4, namely a method of manufacturing an identification plate to be attached to an object, including: providing a concave portion that corresponds to a 2-dimensional code on a front surface of a display area of an identification plate body formed of metal.The method is characterized in that the 2-dimensional code corresponds to information related to the object and in that it applies a transparent inorganic-organic composite paint that has heat resistance on a front surface of the display area where the concave portion is provided such that the paint covers the front surface and fills the concave portion. In the embodiment of the present invention, the inorganic-organic composite paint has heat resistance of 70° to 200°.

In the embodiment of the present invention, the identification plate body is formed of aluminum, and the method further includes carrying out alumite processing on a front surface of the identification plate body before providing the concave portion that corresponds to the 2-dimensional code corresponding to the information related to the object.

There are a die, production equipment (robot, jig, inspection machine, and manufacturing machine), and the like as the object of the present invention. In other words, the identification plate according to the present invention is attached to a die, production equipment (robot, jig, inspection machine, and manufacturing machine), and the like. It is particularly favorable to use the identification plate according to the present invention as a die identification plate to be attached to a die, for solving the problem.

Specifically, a die identification plate according to an embodiment of the present invention is a die identification plate to be attached to a die, including: a die identification plate body formed of metal; a display area having a concave portion that corresponds to a 2-dimensional code corresponding to information related to the die provided on a front surface of the die identification plate body; and a transparent inorganic-organic composite paint layer that has heat resistance, covers a front surface of the display area, and fills the concave portion.

The embodiment of the present invention has a configuration in which the concave portion corresponding to a 2-dimensional code is provided in the display area so as to display the information related to the die, and the inorganic-organic composite paint layer is provided on the front surface of the display area. Therefore, the 2-dimensional code for each individual can be attached with a simple process and produced in a short time. Moreover, since the transparent inorganic-organic composite paint layer having heat resistance covers the front surface of the display area where the concave portion corresponding to the 2-dimensional code is provided and fills the concave portion, dust and oil are not accumulated in the concave portion, and a recognition rate of the 2-dimensional code is not lowered for a long period of time. In addition, since the inorganic-organic composite paint layer fills the concave portion, adhesion between the inorganic-organic composite paint layer and the display area is enhanced, and durability can be maintained for a long period of time.

In the die identification plate according to the embodiment of the present invention, the inorganic-organic composite paint layer has heat resistance of 70° to 200°.

Accordingly, even in a case where the die is used or stored in a harsh heat environment, and the like, the inorganic-organic composite paint layer is not damaged or the like, and the recognition rate of the 2-dimensional code is not lowered for a long period of time.

In the die identification plate according to the embodiment of the present invention, the die identification plate body is formed of aluminum, and the die identification plate further includes an alumite layer provided on the front surface of the display area while avoiding the concave portion.

In the embodiment of the present invention, by providing the alumite layer on the front surface of the display area while avoiding the concave portion, light is apt to be reflected by the concave portion and difficult to be reflected by the front surface of the display area excluding the concave portion. Moreover, the alumite layer is covered and protected by the inorganic-organic composite paint layer. Therefore, the recognition rate of the 2-dimensional code is not lowered for a long period of time.

A method of manufacturing a die identification plate according to an embodiment of the present invention is a method of manufacturing a die identification plate to be attached to an object, the method including: providing a concave portion that corresponds to a 2-dimensional code corresponding to information related to the die on a front surface of a display area of a die identification plate body formed of metal; and applying a transparent inorganic-organic composite paint that has heat resistance on a front surface of the display area where the concave portion is provided such that the paint covers the front surface and fills the concave portion.

Accordingly, the 2-dimensional code of each individual can be attached by a simple process and manufactured in a short time, and in addition, the recognition rate of the 2-dimensional code is not lowered for a long period of time.

In the embodiment of the present invention, the inorganic-organic composite paint has heat resistance of 70° to 200°.

Accordingly, the recognition rate of the 2-dimensional code is not lowered for a long period of time.

In the method of manufacturing a die identification plate according to the embodiment of the present invention, the die identification plate body is formed of aluminum, and the method further includes carrying out alumite processing on a front surface of the identification plate body before providing the concave portion that corresponds to the 2-dimensional code corresponding to the information related to the object.

Accordingly, the die identification plate can be manufactured by a simple process, and the recognition rate of the 2-dimensional code is not lowered for a long period of time.

An NC control program according to an embodiment of the present invention includes a boundary extraction unit and an NC data generation unit.

The boundary extraction unit extracts, from a 2-dimensional code constituted of a first area configured by, out of a plurality of cells that are generated for information binarized into a first value and a second value and are arranged in a first direction and a second direction orthogonal to the first direction, cells corresponding to the first value and a second area configured by cells corresponding to the second value, a boundary between the first area and the second area in the first direction.

The NC data generation unit generates NC (Numerical Control) data for cutting the 2-dimensional code into a cutting target area of a cutting object by a cutting tool, in which a movement path of the cutting tool with respect to the cutting object includes a first path part where the cutting took proceeds in the first direction from outside the cutting target area and reaches outside the cutting target area and a second path part that connects with the first path part and where the cutting tool proceeds in the second direction outside the cutting target area, the first path part is constituted of a cutting part where the cutting tool comes into contact with the cutting object and a non-cutting part where the cutting tool is set apart from the cutting object, and a connection point between the cutting part and the non-cutting part in the first path part is on the boundary.

With this configuration, in the cutting target area, the cutting tool cuts the cutting object in the first path part where it proceeds in the first direction. The movement of the cutting tool in the second direction is made in the second path part outside the cutting target area, and cutting in the second direction is not performed inside the cutting target area. Therefore, the movement path of the cutting tool in the cutting target area is not bent between the first direction and the second direction, and the present invention can shorten a processing time and reduce vibrations more than a conventional method where such bending occurs.

The movement path may further include a third path part that connects with the second path part and where the cutting tool proceeds in a direction opposite to the first direction from outside the cutting target area and reaches outside the cutting target area, the third path part may be constituted of the cutting part and the non-cutting part, and a connection point between the cutting part and the non-cutting part in the third path part may be on the boundary.

With this configuration, since an end point of the third path becomes close to a start point of the first path, the processing time can be additionally shortened.

The NC control program may further include a 2-dimensional code generation unit that generates the 2-dimensional code from input information.

With this configuration, by inputting information wished to be binarized to the NC control program, it becomes possible to generate NC data for creating a 2-dimensional code. In other words, it becomes unnecessary to additionally generate a 2-dimensional code by a different information processing apparatus or a different program.

The NC data generation unit may generate the NC data based on the boundary and an input processing condition.

With this configuration, the NC data generation unit can generate NC data corresponding to a processing condition such as a diameter of the cutting tool and a size of the 2-dimensional code.

The 2-dimensional code may be a QR code (registered trademark).

The QR code (registered trademark) is widely used out of the 2-dimensional codes, and the present invention can be favorably applied thereto.

An NC control apparatus according to an embodiment of the present invention includes a boundary extraction unit and an NC data generation unit.

The boundary extraction unit extracts, from a 2-dimensional code constituted of a first area configured by, out of a plurality of cells that are generated for information binarized into a first value and a second value and are arranged in a first direction and a second direction orthogonal to the first direction, cells corresponding to the first value and a second area configured by cells corresponding to the second value, a boundary between the first area and the second area in the first direction.

The NC data generation unit generates NC data for cutting the 2-dimensional code into a cutting target area of a cutting object by a cutting tool, in which a movement path of the cutting tool with respect to the cutting object includes a first path part where the cutting took proceeds in the first direction from outside the cutting target area and reaches outside the cutting target area and a second path part that connects with the first path part and where the cutting tool proceeds in the second direction outside the cutting target area, the first path part is constituted of a cutting part where the cutting tool comes into contact with the cutting object and a non-cutting part where the cutting tool is set apart from the cutting object, and a connection point between the cutting part and the non-cutting part in the first path part is on the boundary.

An NC processing system according to an embodiment of the present invention includes an NC control apparatus and a cutting apparatus.

The NC control apparatus includes a boundary extraction unit and an NC data generation unit.

The boundary extraction unit extracts, from a 2-dimensional code constituted of a first area configured by, out of a plurality of cells that are generated for information binarized into a first value and a second value and are arranged in a first direction and a second direction orthogonal to the first direction, cells corresponding to the first value and a second area configured by cells corresponding to the second value, a boundary between the first area and the second area in the first direction.

The NC data generation unit generates NC data for cutting the 2-dimensional code into a cutting target area of a cutting object by a cutting tool, in which a movement path of the cutting tool with respect to the cutting object includes a first path part where the cutting took proceeds in the first direction from outside the cutting target area and reaches outside the cutting target area and a second path part that connects with the first path part and where the cutting tool proceeds in the second direction outside the cutting target area, the first path part is constituted of a cutting part where the cutting tool comes into contact with the cutting object and a non-cutting part where the cutting tool is set apart from the cutting object, and a connection point between the cutting part and the non-cutting part in the first path part is on the boundary.

The cutting apparatus carries out cutting processing on the cutting object based on the NC data.

An NC control method according to an embodiment of the present invention includes extracting, from a 2-dimensional code constituted of a first area configured by, out of a plurality of cells that are generated for information binarized into a first value and a second value and are arranged in a first direction and a second direction orthogonal to the first direction, cells corresponding to the first value and a second area configured by cells corresponding to the second value, a boundary between the first area and the second area in the first direction.

Generated is NC data for cutting the 2-dimensional code into a cutting target area of a cutting object by a cutting tool, in which a movement path of the cutting tool with respect to the cutting object includes a first path part where the cutting took proceeds in the first direction from outside the cutting target area and reaches outside the cutting target area and a second path part that connects with the first path part and where the cutting tool proceeds in the second direction outside the cutting target area, the first path part is constituted of a cutting part where the cutting tool comes into contact with the cutting object and a non-cutting part where the cutting tool is set apart from the cutting object, and a connection point between the cutting part and the non-cutting part in the first path part is on the boundary.

A method of manufacturing a 2-dimensional code according to an embodiment of the present invention includes extracting, from a 2-dimensional code constituted of a first area configured by, out of a plurality of cells that are generated for information binarized into a first value and a second value and are arranged in a first direction and a second direction orthogonal to the first direction, cells corresponding to the first value and a second area configured by cells corresponding to the second value, a boundary between the first area and the second area in the first direction.

Generated is NC data for cutting the 2-dimensional code into a cutting target area of a cutting object by a cutting tool, in which a movement path of the cutting tool with respect to the cutting object includes a first path part where the cutting took proceeds in the first direction from outside the cutting target area and reaches outside the cutting target area and a second path part that connects with the first path part and where the cutting tool proceeds in the second direction outside the cutting target area, the first path part is constituted of a cutting part where the cutting tool comes into contact with the cutting object and a non-cutting part where the cutting tool is set apart from the cutting object, and a connection point between the cutting part and the non-cutting part in the first path part is on the boundary.

The NC data is supplied to the cutting apparatus so that the cutting object is subjected to cutting processing.

A 2-dimensional code according to an embodiment of the present invention is produced by the method of manufacturing a 2-dimensional code.

A metal component according to an embodiment of the present invention includes the 2-dimensional code manufactured by the method of manufacturing a 2-dimensional code.

According to the NC control program, the NC control apparatus, the NC processing system, the NC control method, the method of manufacturing a 2-dimensional code, the 2-dimensional code, and the metal component according to the embodiment of the present invention, an NC control program, an NC control apparatus, an NC processing system, an NC control method, a method of manufacturing a 2-dimensional code, a 2-dimensional code, and a metal component with which a 2-dimensional code can be created by cutting processing having excellent productivity can be provided.

### Advantageous Effects of Invention

According to the present invention, a 2-dimensional code of each individual can be attached by a simple process and produced in a short time, and a recognition rate of a 2-dimensional code is not lowered for a long period of time.

### Brief Description of Drawings

[Fig. 1] A top view showing a configuration of a die identification plate according to an embodiment of the present invention.
[Fig. 2] A partial longitudinal cross-sectional diagram of Fig. 1.
[Fig. 3] A diagram schematically showing the top view of Fig. 1.
[Fig. 4] A flow showing a configuration of a method of manufacturing a die identification plate according to an embodiment of the present invention.
[Fig. 5] A schematic diagram of an NC processing system according to the embodiment of the present invention.
[Fig. 6] A schematic diagram of an NC control apparatus included in the NC processing system.
[Fig. 7] An example of a 2-dimensional code formed by the NC processing system.
[Fig. 8] A schematic diagram of cells configuring the 2-dimensional code.
[Fig. 9] A schematic diagram showing extraction of a boundary between a first area and a second area by the NC control apparatus included in the NC processing system according to the embodiment of the present invention.
[Fig. 10] A schematic diagram showing a processing condition that the NC control apparatus acquires.
[Fig. 11] A schematic diagram showing the number of movement paths of a cutting tool with respect to each row of cells, that is set by the NC control apparatus.
[Fig. 12] A schematic diagram showing control points of the cutting tool set by the NC control apparatus.
[Fig. 13] A schematic diagram showing movement paths of the cutting tool in X-Y directions, that are set by the NC control apparatus.
[Fig. 14] A schematic diagram showing movement paths of the cutting tool in a Z direction, that are set by the NC control apparatus.
[Fig. 15] A schematic diagram showing movement paths of the cutting tool set by the NC control apparatus.
[Fig. 16] An example of movement paths of the cutting tool generated by the NC control apparatus.
[Fig. 17] An example of the movement paths of the cutting tool set by the NC control apparatus.
[Fig. 18] A schematic diagram showing a state of cutting processing by a cutting apparatus that is based on NC data generated by the NC control apparatus.
[Fig. 19] A schematic diagram of a metal nameplate manufactured by the cutting processing that is based on NC data generated by the NC control apparatus.
[Fig. 20] An example of movement paths of the cutting tool for generating a 2-dimensional code in NC data of a system of the past.
[Fig. 21] Data related to transparency of an inorganic-organic composite paint according to the present invention.

### Mode for Carrying Out the Invention

Hereinafter, an embodiment of the present invention will be described with reference to the drawings.

### [Configuration of die identification plate]

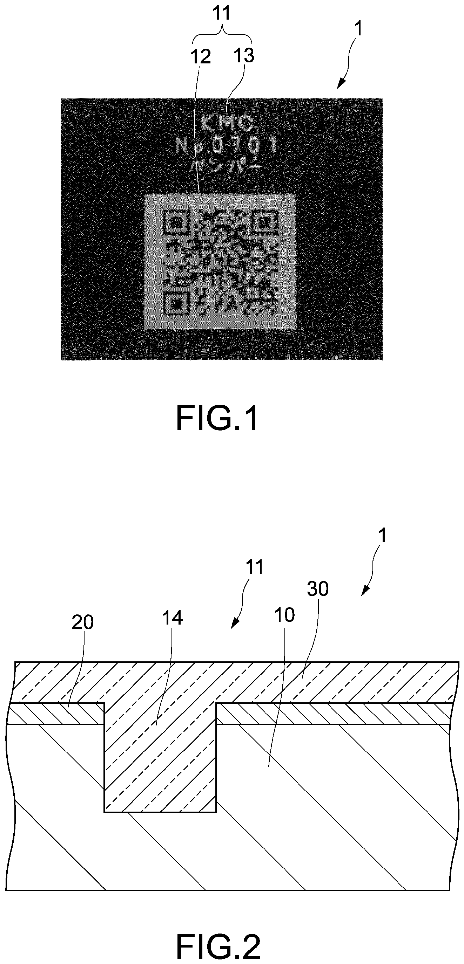

Fig. 1 is a top view showing a configuration of a die identification plate according to an embodiment of the present invention. Fig. 2 is a partial longitudinal cross-sectional diagram thereof.

As shown in Figs. 1 and 2, a die identification plate 1 is a die identification plate to be attached to a die (illustration is omitted in figure). Here, the die includes a die component configuring a die in addition to the die itself. The die component is managed while the die identification plate 1 is attached thereto in some cases. The die includes various dies such as a press die, a forging die, a casting die, and an injection molding die.

The die identification plate 1 includes a die identification plate body 10, an alumite layer 20, and an inorganic-organic composite paint layer 30.

The die identification plate body 10 is formed of aluminum and is, for example, a rectangular plate-like member. A thickness of the die identification plate body 10 is, for example, 1 to 1.5 mm, and other metal such as stainless steel, for example, may be used in place of aluminum.

The die identification plate body 10 includes a display area 11 at substantially the center thereof.

The display area 11 includes a first display area 12 where concave portions 14 that correspond to a QR code (registered trademark) as a 2-dimensional code corresponding to information related to the die are provided and a second display area 13 where concave portions 14 corresponding to information with which a company name, serial number, and the like can be visually checked in a direct manner are provided. These concave portions 14 are formed by cutting processing to be described later, for example.

The information related to a die is information for accessing a server (not shown) that stores, for example, production technology information, production/equipment information, and management information and accessing the production technology information, production/equipment information, and management information of an individual die out of die information stored in that server. The information stored in the server may be stored in a single server or may be dispersedly stored in a plurality of servers. The information related to a die may include, in addition to the information for access described above, information on the second display area 13 or other information, for example.

Here, as the production technology information, there are a die manufacturer, die data, the number of production shots, die maintenance information, a location, and the like, for example. Further, as the production/equipment information, there are, for example, manufacturing condition data such as a molding condition, a production machine/jig specification, production line data, maintenance information of equipment and the like, quality information, production environment information such as a power supply, temperature, and humidity, and the like. As the management information, there are, for example, a QC process chart, a task manual, an inspection manual, and the like.

A depth of the concave portion 14 is favorably set within a range of 0.1 mm to 0.2 mm, more favorably 0.15 mm. If the depth is smaller than 0.1 mm, there is a fear that inner side surfaces of the concave portion 14 will not be recognized as the concave portion 14 when the side surfaces become inclined surfaces during processing, for example, and if the depth is larger than 0.2 mm, there is a fear that upper corners on the inner side of the concave portion will be easily broken and thus will not be recognized as the concave portion 14. If the depth of the concave portion 14 is around 0.15 mm, those situations can be prevented from occurring, and a QR code (registered trademark) is recognized correctly.

The alumite layer 20 is provided on a front surface of the die identification plate body 10 including a front surface of the display area 11 while avoiding the concave portions 14. The alumite layer 20 is formed by alumite processing to be described later. When looking at the die identification plate body 10 from an upper surface, an area where the alumite layer 20 is provided is colored in black, and the concave portions 14 are in a color of glaze of aluminum itself. Insofar as a color difference between the front surface and the concave portions 14 in a layer is clear, the present invention also includes that layer in addition to the alumite layer. However, in a case where the die identification plate body 10 is formed of aluminum, it is favorable to use the alumite layer 20. This is because the alumite layer 20 can be easily formed by alumite processing and becomes black with which a color difference from the concave portions 14 becomes clear.

The inorganic-organic composite paint layer 30 is formed of a transparent two-component room temperature curing type inorganic-organic hybrid paint having heat resistance (e.g., "FOC700 (product name)" available from FECT INC.). The heat resistance is favorably within a range of 70° to 200°. Accordingly, even in a case where a die is used or stored in a harsh heat environment and the like, the inorganic-organic composite paint layer 30 is not damaged or the like, and a recognition rate of a QR code as the 2-dimensional code is not lowered for a long period of time.

The inorganic-organic composite paint layer 30 is provided on the front surface of the die identification plate body 10, covers the front surface of the display area 11 where the concave portions 14 that correspond to the QR code as the 2-dimensional code corresponding to the information related to the die are provided, and fills the concave portions 14. A front surface of the inorganic-organic composite paint layer 30 including positions corresponding to the concave portions 14 is substantially flat. Further, it is favorable for the thickness of the inorganic-organic composite paint layer 30 as a height from the front surface of the die identification plate body 10 to be set within a range of 0.1 mm to 0.2 mm. If that thickness is smaller than 0.1 mm, protection of the display area 11 by the inorganic-organic composite paint layer 30 becomes insufficient. For example, there is a fear that the inorganic-organic composite paint layer 30 will break to expose the display area 11 from the front surface or an adverse mechanical influence will be imparted to the concave portions 14 of the display area 11 via the inorganic-organic composite paint layer 30. On the other hand, with the thickness of 0.2 mm, the protection above becomes sufficient, and with a thickness larger than 0.2 mm, a coating material becomes a waste.

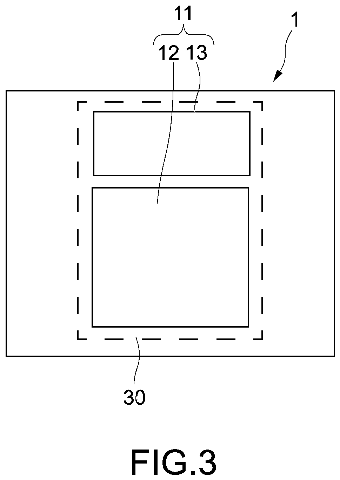

The inorganic-organic composite paint layer 30 does not need to be formed across the entire front surface of the die identification plate body 10 as shown in Fig. 3. Specifically, the inorganic-organic composite paint layer 30 only needs to cover at least the front surface of the display area 11. By covering a certain amount of area including the front surface of the display area 11, high accuracy is not required in a process of applying an inorganic-organic composite paint to be described later, and a coating material can also be saved.

The die identification plate 1 according to this embodiment has a configuration in which the concave portions 14 corresponding to a QR code (registered trademark) as the 2-dimensional code are provided in the display area 11 so as to display the information related to the die, and the inorganic-organic composite paint layer 30 is provided on the front surface of the display area 11. Therefore, the QR code (registered trademark) as the 2-dimensional code for each individual can be attached by a simple process and produced in a short time as will be described later.

Further, since the transparent inorganic-organic composite paint layer 30 having heat resistance covers the front surface of the display area 11 where the concave portions 14 corresponding to the 2-dimensional code are provided and also fills the concave portions 14, dust and oil are not accumulated in the concave portions 14, and thus a recognition rate of a QR code (registered trademark) as the 2-dimensional code is not lowered for a long period of time. In addition, since the inorganic-organic composite paint layer 30 is configured to also fill the concave portions 14, adhesion between the inorganic-organic composite paint layer 30 and the display area 11 is enhanced, and durability can be maintained for a long period of time. For example, if the adhesion between the inorganic-organic composite paint layer 30 and the display area 11 is poor, there is a possibility that gas and the like will be accumulated in the concave portions 14 when created, and the concave portions 14 and the like will change over time due to oxidation and the like by such gas and the like, with the result that the recognition rate of a QR code (registered trademark) as the 2-dimensional code will be lowered. Moreover, with poor adhesion, the inorganic-organic composite paint layer 30 may be peeled off from the display area 11 so that the display area 11 will be exposed.

### [Method of manufacturing die identification plate]

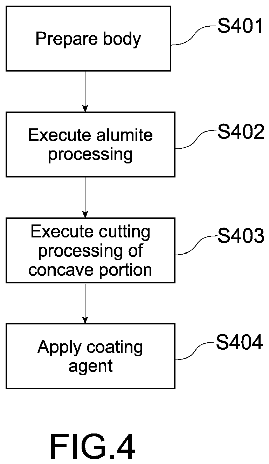

Fig. 4 is a flow showing a configuration of a method of manufacturing the die identification plate 1 according to the embodiment of the present invention.

First, a rectangular plate-like die identification plate body 10 that is formed of aluminum and has a thickness of, for example, 1 to 1.5 mm is prepared (Step 401).

Next, alumite processing is carried out on an entire one surface of the die identification plate body 10 (Step 402) to form the alumite layer 20.

Next, the concave portions 14 are formed at substantially the center of the surface of the die identification plate body 10, that has been subjected to the alumite processing (assumed to be front surface), with a depth of about 0.1 mm to 0.2 mm by cutting processing (Step 403), to form the display area 11.

As described above, the display area 11 includes the first display area 12 where the concave portions 14 that correspond to a QR code (registered trademark) as the 2-dimensional code corresponding to information related to a die are provided and the second display area 13 where concave portions 14 corresponding to information with which a company name, serial number, and the like can be visually checked in a direct manner are provided.

Next, as shown in Fig. 3, an inorganic-organic composite paint is applied onto the front surface of the die identification plate body 10 so as to cover a certain amount of area including the front surface of the display area 11 (Step 404) to form the inorganic-organic composite paint layer 30 having a thickness of about 0.1 mm to 0.2 mm.

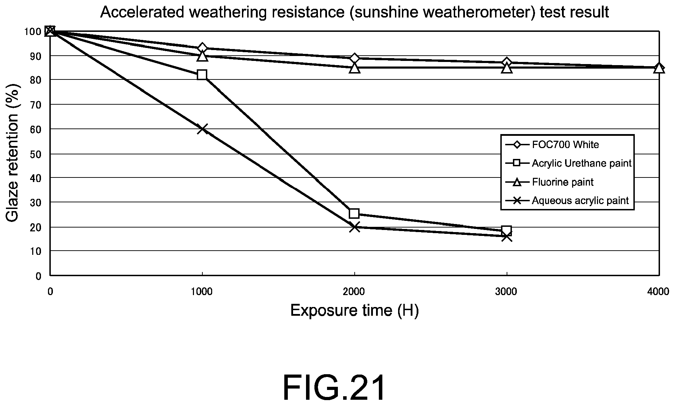

In the present invention, by providing the inorganic-organic composite paint layer formed of an inorganic-organic composite paint as a layer that protects the concave portions, the layer that protects the concave portions can be formed merely by an application process, and in addition, exceptional heat resistance and durability can be obtained, with the result that the recognition rate of the 2-dimensional code can be maintained for a long period of time. Moreover, bubbles and the like left in the concave portions during application rise to the front surface so that the bubbles are not left in the concave portions, so adhesion becomes extremely high. In addition, as compared to the forming of a protection layer that requires calcination or the like, the protection layer can be formed merely by an application process in the present invention. Therefore, a protection layer having extremely-high adhesion can be formed by a simple process in a short time. Further, by using the two-component room temperature curing type inorganic-organic hybrid paint (e.g., "FOC700 (product name)" available from FECT INC.), transparency can be maintained for a long period of time, and thus, the recognition rate of the 2-dimensional code can be maintained for a long period of time. Fig. 21 shows data on transparency disclosed by FECT INC. In the figure, using FOC700 color white as a paint and a bonded steel plate (150*50*0.3 mm) as a material in a thickness of 25 to 30 µm, the test was performed after drying at 80°C for 30 minutes and leaving it under room temperature for 2 weeks as a curing condition.

### [Configuration of NC processing system]

Next, an NC processing system for performing cutting processing so as to form the concave portions 14 in the first display area 12 of the display area 11 will be described.

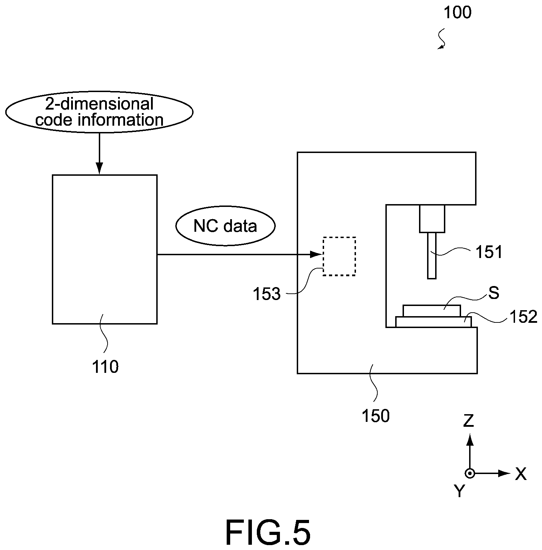

Fig. 5 is a schematic diagram of an NC processing system 100 according to this embodiment. As shown in the figure, the NC processing system 100 includes a control apparatus 110 and a cutting apparatus 150.

The control apparatus 110 acquires 2-dimensional code information to generate NC data and supplies the NC data to the cutting apparatus 150. A functional configuration of the control apparatus 110 will be described later, but it may be an information processing apparatus. The control apparatus 110 may be an apparatus independent from the cutting apparatus 150 or may be mounted on the cutting apparatus 150.

The cutting apparatus 150 performs cutting processing based on the NC data supplied from the control apparatus 110. The cutting apparatus 150 includes a cutting tool 151, a stage 152, and a control unit 153, and a processing object S is mounted on the stage 152.

Hereinafter, it is assumed that one direction of a cutting target surface of the processing object S is an X direction, and a direction orthogonal to the X direction on the same surface is a Y direction. Further, it is assumed that a direction orthogonal to the X direction and the Y direction is a Z direction.

The cutting tool 151 is, for example, an end mill, and is brought into contact with the processing object S while being rotationally driven by a rotation drive mechanism and cuts the processing object S. The cutting tool 151 is configured to be movable in the X direction, the Y direction, and the Z direction by a drive source (servomotor).

The stage 152 supports the processing object S. The stage 152 moves in the X direction and the Y direction by the drive source to move the processing object S.

The control unit 153 controls the respective units of the cutting apparatus 150 based on the NC data acquired from the control apparatus 110. Specifically, the control unit 153 controls the drive source of the cutting tool 151 and the stage 152 to control relative positions of the processing object S and the cutting tool 151 in the X direction, the Y direction, and the Z direction.

The configuration of the cutting apparatus 150 is not limited to that described above, and any apparatus may be used as long as it can at least control the relative positions of the processing object S and the cutting tool 151 in the X direction, the Y direction, and the Z direction upon being supplied with NC data.

### [Configuration and operation of control apparatus]

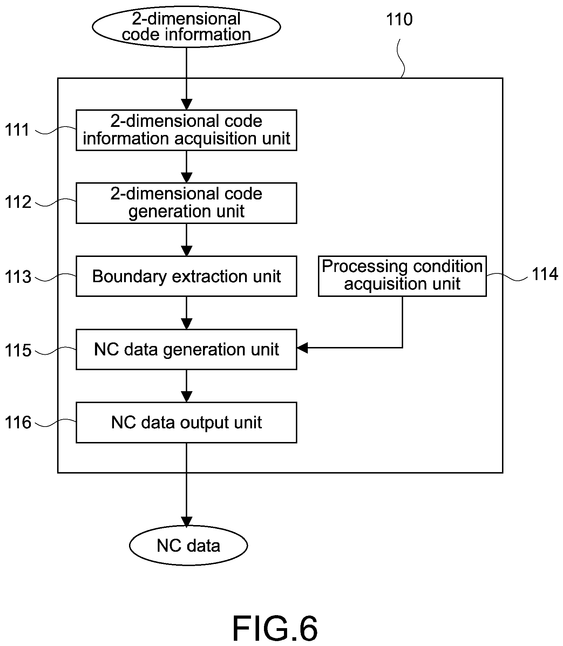

A configuration and operation of the control apparatus 110 will be described. Fig. 6 is a schematic diagram showing a functional configuration of the control apparatus 110. As shown in the figure, the control apparatus 110 includes a 2-dimensional code information acquisition unit 111, a 2-dimensional code generation unit 112, a boundary extraction unit 113, a processing condition acquisition unit 114, an NC data generation unit 115, and an NC data output unit 116.

The 2-dimensional code information acquisition unit 111 acquires 2-dimensional code information. The 2-dimensional code information is information encoded to a 2-dimensional code, and examples thereof include a model number, name, component name, process, manufacturing date, reparation history, relationship with other dies, lifetime, product information (material, quality, production lot, etc.), production machine, process, installation method, installation procedure, relationship with jigs, and the like of a product.

The 2-dimensional code information acquisition unit 111 may acquire the 2-dimensional code information by a user input or generate the 2-dimensional code information (date etc.). The 2-dimensional code information acquisition unit 111 supplies the acquired 2-dimensional code information to the 2-dimensional code generation unit 112.

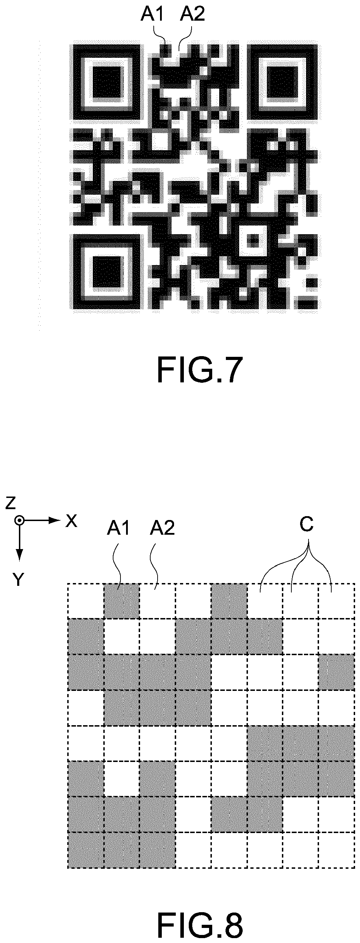

The 2-dimensional code generation unit 112 generates a 2-dimensional code from the 2-dimensional code information. Fig. 7 shows a QR code (registered trademark) as an example of the 2-dimensional code. The 2-dimensional code is a code in which information is binarized and arranged in a plane and includes a QR code (registered trademark) and 2-dimensional codes based on other standards.

The 2-dimensional code generation unit 112 is capable of generating a 2-dimensional code according to a predetermined 2-dimensional code generation algorithm. The 2-dimensional code may include, in addition to the code generated based on the 2-dimensional code information, a symbol indicating a reading direction, format information, an error correction code, and the like.

As shown in Fig. 7, it is assumed that in the 2-dimensional code, an area corresponding to one value out of the binarized information (black area in figure) is a first area A1, and an area corresponding to the other value (white area in figure) is a second area A2. The first area A1 and the second area A2 are not limited to white and black, and any color may be used as long as both areas can be distinguished from each other by a reading apparatus.

Fig. 8 is a partially-enlarged diagram of the 2-dimensional code. As shown in the figure, a plurality of cells C are arranged in the X direction and the Y direction in the 2-dimensional code. Each of the cells C is colored in either color so as to form the first area A1 and the second area A2. The 2-dimensional code generation unit 112 supplies the generated 2-dimensional code to the boundary extraction unit 113.

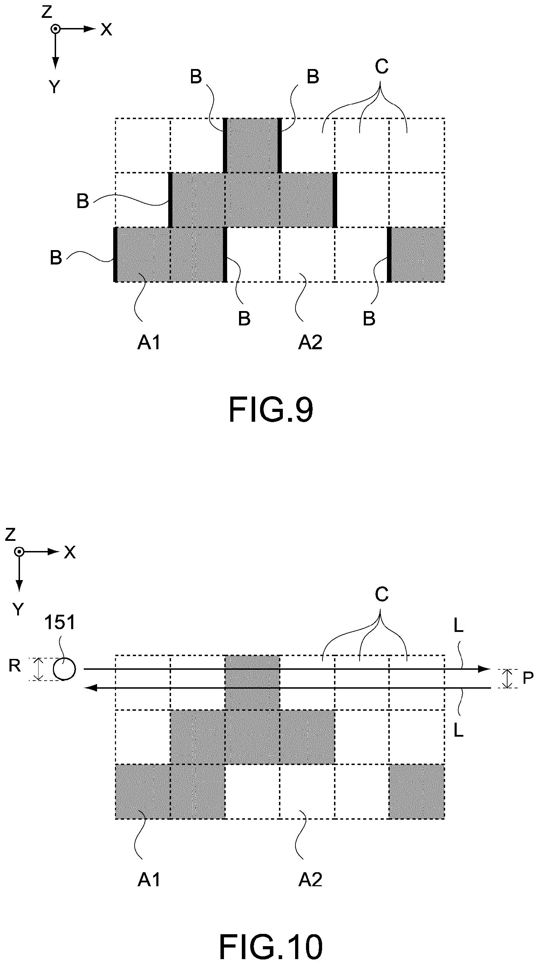

The boundary extraction unit 113 extracts a boundary between the first area A1 and the second area A2 in the X direction from the 2-dimensional code. Fig. 9 is a schematic diagram showing the extraction of a boundary by the boundary extraction unit 113. As shown in the figure, with the adjacent cells C of the same color in the X direction being set as one range for each row of the cells C, the boundary extraction unit 113 extracts a boundary of each of the areas. In Fig. 9, boundaries extracted by the boundary extraction unit 113 are each indicated as a boundary B. The boundary extraction unit 113 executes boundary extraction processing on each row of the cells C. The boundary extraction unit 113 supplies the extracted boundaries to the NC data generation unit 115.

The processing condition acquisition unit 114 acquires cutting processing conditions (hereinafter, referred to as processing conditions). Fig. 10 is a schematic diagram showing the processing conditions. Movement paths L shown in the figure are movement paths of the cutting tool 151 with respect to the processing object S. As shown in the figure, the processing conditions include a diameter R of the cutting tool 151 and a scan pitch P (interval of movement paths L). The processing conditions also include the number of cells and size (processing size in cutting object) of a 2-dimensional code. These processing conditions may be input by a user or may be calculated by the processing condition acquisition unit 114. The processing condition acquisition unit 114 supplies the processing conditions to the NC data generation unit 115.

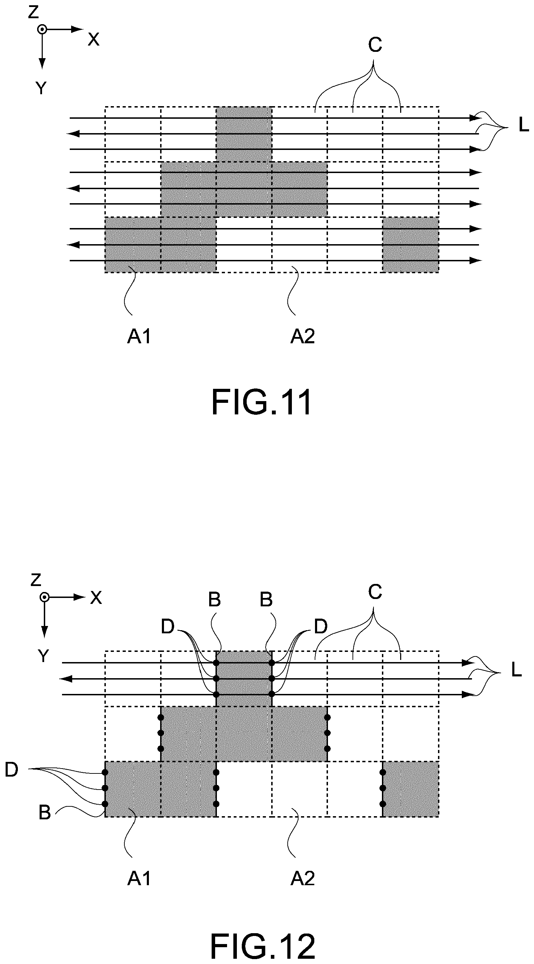

The NC data generation unit 115 generates NC data for forming a 2-dimensional code. Fig. 11 is a schematic diagram showing a method of generating NC data by the NC data generation unit 115. As shown in the figure, the NC data generation unit 115 calculates the number of movement paths L with respect to each row of the cells C in the 2-dimensional code. The NC data generation unit 115 calculates the number of movement paths L with respect to each row based on the processing conditions supplied from the processing condition acquisition unit 114, specifically, the size of the 2-dimensional code, the scan pitch P, and the diameter R.

In Fig. 11, the number of movement paths L with respect to each row of the cells is 3, but the number is not limited to this and may be 1, 2, or 4 or more. Subsequently, the NC data generation unit 115 extracts intersections of the movement paths L and the boundaries B. Fig. 12 is a schematic diagram showing intersections D of the movement paths L and the boundaries B. As shown in the figure, the NC data generation unit 115 extracts the intersections D in each row of the cells.

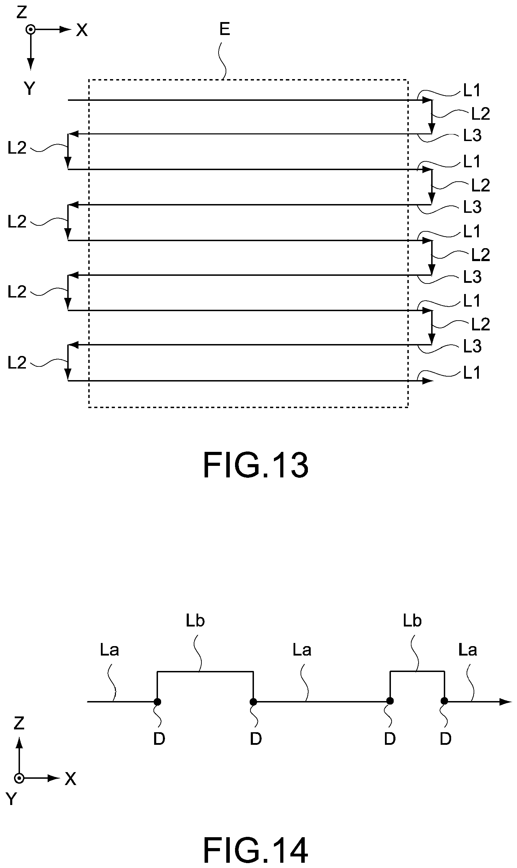

Subsequently, the NC data generation unit 115 determines the movement paths L using the intersections D. Fig. 13 is a schematic diagram showing the movement paths L. In the figure, a cutting target area E is shown. The cutting target area E is an area corresponding to a 2-dimensional code forming range (within outer circumference of 2-dimensional code).

The movement paths L of the 2-dimensional code include first path parts L1, second path parts L2, and third path parts L3. The first path parts L1 each proceed from outside the cutting target area E in the X direction and reach a point outside the cutting target area E. The second path parts L2 each proceed in the Y direction while being continuous with the first path part L1. The third path parts L3 each proceed in a direction opposite to the X direction while being continuous with the second path part L2 and reach a point outside the cutting target area E. It should be noted that although illustrations are simplified in Fig. 9, one or more first path parts L1 and third path parts L3 are included with respect to each row of the cells in the 2-dimensional code in actuality (see Fig. 13).

Fig. 14 is a schematic diagram showing the movement paths L in the Z direction. As shown in the figure, the movement path L includes cutting parts La and non-cutting parts Lb in the Z direction. The cutting parts La are parts where the cutting tool 151 comes into contact with the processing object S out of the movement path L, and the non-cutting parts Lb are parts where the cutting tool 151 is set apart from the processing object S. Connection points between the cutting parts La and the non-cutting parts Lb match with the intersections D. It should be noted that the cutting tool 151 only needs to be set apart from the processing object S in the non-cutting parts Lb, and the non-cutting parts Lb are not limited to a straight line as shown in Fig. 14 and may be curved.

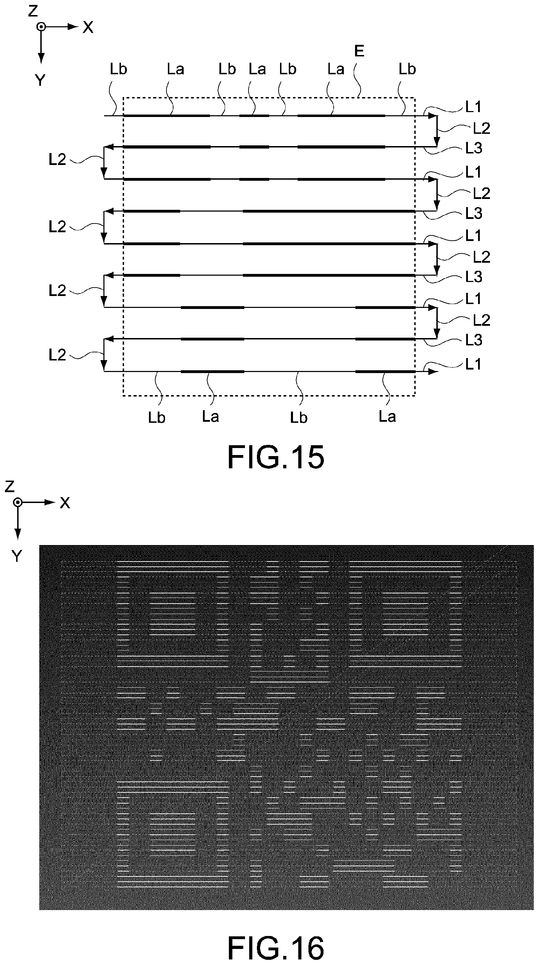

Fig. 15 is a schematic diagram showing the movement paths L in which the cutting parts La and the non-cutting parts Lb are indicated. As shown in the figure, the first path parts L1 and the third path parts L3 are constituted of the cutting parts La and the non-cutting parts Lb. On the other hand, the second path parts L2 are constituted of the non-cutting parts Lb. It should be noted that the first path parts L1 and the third path parts L3 may be constituted of only the cutting parts La or only the non-cutting parts Lb depending on a pattern of the 2-dimensional code.

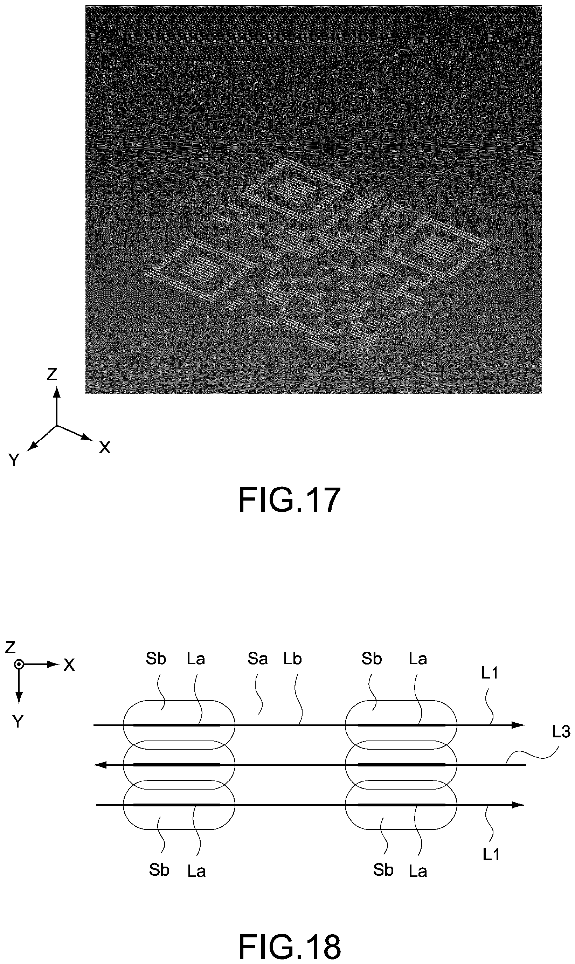

The NC data generation unit 115 generates the NC data including the movement paths L as described above. Figs. 16 and 17 each show an example of actually-generated NC data. As shown in these figures, the cutting parts La (white lines in figures) correspond to the first area A1, and the non-cutting parts Lb (broken lines in figures) correspond to the second area A2. The NC data generation unit 115 supplies the generated NC data to the NC data output unit 116.

The NC data output unit 116 outputs the NC data generated by the NC data generation unit 115 to the control unit 153 of the cutting apparatus 150. The NC data output unit 116 may output the NC data directly to the control unit 153 or may output it via a network.

The control apparatus 110 includes the functional configuration as described above. A hardware configuration of the control apparatus 110 only needs to realize the functional configuration as described above and may include a CPU (Central Processing Unit), a GPU (Graphics Processing Unit), a memory, an input/output interface, and the like.

It should be noted that in the descriptions above, the control apparatus 110 acquires the 2-dimensional code information and generates a 2-dimensional code, but the present invention is not limited thereto. For example, the control apparatus 110 may acquire a 2-dimensional code generated by another information processing apparatus. In this case, the boundary extraction unit 113 carries out the boundary extraction processing on the acquired 2-dimensional code.

### [Operation of cutting apparatus]

Upon being supplied with NC data from the control apparatus 110, the cutting apparatus 150 carries out cutting based on that NC data. With a front surface (hereinafter, referred to as cutting target surface) of the processing object S mounted on the stage 152 being an X-Y plane in the NC data and a direction vertical to the cutting target surface being the Z direction, the cutting apparatus 150 moves the cutting tool 151 according to the movement paths L.

Fig. 18 is a schematic diagram showing the movement paths L and cutting surfaces formed by the cutting. As shown in the figure, the cutting tool 151 comes into contact with a cutting target surface Sa in the cutting parts La, and cutting surfaces Sb are formed around the cutting parts La. The cutting surfaces Sb may be continuous between adjacent movement paths L or may slightly be set apart. The cutting tool 151 does not come into contact with the cutting target surface Sa in a periphery of the non-cutting parts Lb, and thus the cutting target surface Sa remains.

By a color difference between the cutting target surface Sa and the cutting surfaces Sb, the first area A1 and the second area A2 are formed to eventually form the 2-dimensional code as shown in Fig. 7. For example, in a case where the cutting target surface Sa is metal that has been subjected to surface processing, the surface processing is removed for the cutting surfaces Sb so that a color difference is generated between the cutting target surface Sa and the cutting surfaces Sb and becomes readable. Moreover, in a case where the cutting target surface Sa is a rough surface, the 2-dimensional code may be formed by a difference in optical reflectance with respect to the smoothened cutting surfaces Sb. Furthermore, in a case where the cutting target surface Sa is a smooth surface, the 2-dimensional code may be formed by a difference in a light reflection property between the cutting target surface Sa and the cutting surfaces Sb due to diffused reflection by the roughened cutting surfaces Sb. In particular, the cells of the 2-dimensional code can be formed from the plurality of linear cutting surfaces Sb, and an improvement of a recognition rate of the 2-dimensional code (reading success rate) due to diffuse reflection becomes possible. It should be noted that a cutting depth is not limited in particular and only needs to be of a level that enables the 2-dimensional code to be read.

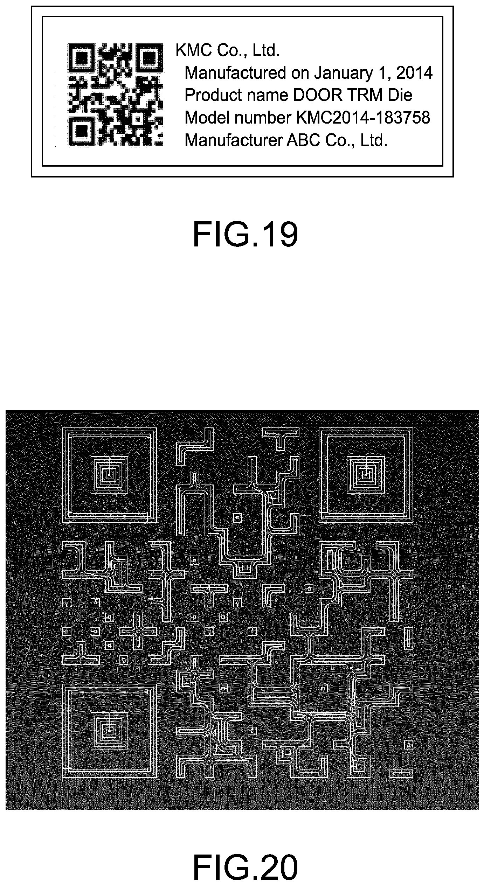

The processing object S is not limited in particular as long as it is an object on which cutting processing can be performed and may be a component formed of metal, such as a die, a die component, a jig, and a standard component, for example. Moreover, the processing object S may be a metal nameplate. Fig. 19 shows an example of a metal nameplate that can be manufactured using the cutting apparatus 150. As shown in the figure, a 2-dimensional code and character strings are formed on the metal nameplate by cutting processing. The 2-dimensional code may be formed based on the NC data described above, and the character strings may be formed by general NC processing.

### [Effects of NC processing system]

Effects of the NC processing system 100 according to this embodiment will be described while comparing them with those of the system of the past. Fig. 20 is a schematic diagram showing NC data used by an NC processing system of the past system. Movement paths of a cutting tool are constituted of cutting parts (white lines in figure) and non-cutting parts (dotted lines in figure). As shown in the figure, in the past system, a 2-dimensional code is sectioned into a large number of processing areas, and NC data set with cutting parts is set is used for each processing area.

Since paint processing is performed in each processing area, the movement paths are alternately bent in the X direction and the Y direction. When cutting processing is performed using this NC data, acceleration and deceleration control of the cutting tool becomes necessary every time the movement path is bent, thus requiring a large amount of time in the processing. Further, since the cutting tool frequently moves in the X direction and the Y direction, the processing apparatus largely vibrates, and processing accuracy is lowered. Furthermore, the number of control points in the movement paths becomes large, and a data length (number of steps) of NC data also becomes large.

In contrast, in the NC data used by the NC processing system 100 of this embodiment, the movement paths are extended in the X direction in the cutting target area, and cutting is performed only in the X direction. Therefore, acceleration and deceleration of the cutting tool with respect to the Y direction are unnecessary, and a processing time can be made shorter than that of the past system. Further, since the movement of the cutting tool in the Y direction only occurs at a return point of the movement in the X direction, it is not frequent, and the vibration of the processing apparatus can be prevented from occurring. Furthermore, the number of control points in the movement paths is small, and a data length of NC data can be shortened.

Even when comparing the lengths of the cutting parts, the cutting parts do not overlap (intersect) one another and have minimum lengths in the case of the NC data of this embodiment, whereas the cutting parts overlap one another in the past system. In the case of the NC data of this embodiment, the movement paths extend to outside the cutting target area, but cutting is not performed outside the cutting target area, so the cutting tool can be moved at high speed. For example, a movement velocity during cutting is about 1000 mm/min whereas a movement velocity during non-cutting (air-cutting) is about 15000 mm/min. Therefore, even when the non-cutting part becomes long, the processing time is not largely influenced. Meanwhile, by making the cutting parts minimum, the processing time can be shortened.

It should be noted that the present invention is not limited to the embodiment described above and can be variously modified within a technical idea thereof, and ranges of such modifications also belong to the technical range of the present invention.

For example, the material of the inorganic-organic composite paint layer described above is not limited to that exemplified above, and as long as it is a material having similar functions, the present invention can be embodied similarly.

Furthermore, the cutting processing of the concave portions in the display area is also not limited to the embodiment above, and other cutting processing may be used instead.

### Reference Signs List

- 1: die identification plate
- 10: die identification plate body
- 11: display area
- 14: concave portion
- 20: alumite layer
- 30: inorganic-organic composite paint layer

## Claims

1. An identification plate (1) to be attached to an object, comprising:
an identification plate body (10)formed of metal;
and
a display area (11) having a 2-dimensional code, the 2-dimensional code being displayed by a concave portion (14) of the display area (11) provided on a front surface of the identification plate body (10), **characterized in that**:
the 2-dimensional code corresponds to information related to the object; and
a transparent inorganic-organic composite paint layer (30) has heat resistance, covers a front surface of the display area (11), and fills the concave portion (14).

2. The identification plate (1) according to claim 1, wherein
the inorganic-organic composite paint layer (30) has heat resistance of 70° to 200°.

3. The identification plate (1) according to claim 1 or 2, wherein
the identification plate body (10) is formed of aluminum, and
the identification plate (1) further comprises
an alumite layer (20) provided on the front surface of the display area (11) while avoiding the concave portion (14).

4. A method of manufacturing an identification plate (1) to be attached to an object, comprising:
providing a display area (11) having a 2-dimensional code, the 2-dimensional code displayed by a concave portion (14) provided on a front surface of an identification plate body (10) formed of metal, **characterized in that**:
the 2-dimensional code corresponds corresponding to information related to the object; and
the method applies a transparent inorganic-organic composite paint (30) that has heat resistance on a front surface of the display area (11) where the concave portion (14) is provided such that the paint covers the front surface and fills the concave portion (14).

5. The method of manufacturing an identification plate (1) according to claim 4, wherein
the inorganic-organic composite paint has heat resistance of 70° to 200°.

6. The method of manufacturing an identification plate (1) according to claim 4 or 5, wherein
the identification plate body (10) is formed of aluminum, and
the method further comprises
carrying out alumite processing on a front surface of the identification plate body (10) before providing the concave portion (14).

## Patentansprüche

1. An einem Objekt anzubringendes Identifikationsschild (1), bestehend aus:
einem Identifikationsschildkörper (10), der aus Metall gebildet ist; und
einem Anzeigebereich (11) mit einem 2-dimensionalen Code, wobei der 2-dimensionale Code durch einen konkaven Abschnitt (14) des Anzeigebereichs (11) angezeigt wird, der auf einer Vorderfläche des Identifikationsschildkörpers (10) vorgesehen ist,
**dadurch gekennzeichnet, dass**
der 2-dimensionale Code Informationen entspricht, die sich auf das Objekt beziehen; und
eine transparente anorganisch-organische Verbundfarbschicht (30) wärmebeständig ist, eine vordere Fläche des Anzeigebereichs (11) bedeckt und den konkaven Teil (14) ausfüllt.

2. Identifikationsschild (1) nach Anspruch 1, wobei
die anorganisch-organische Verbundfarbschicht (30) hat eine Hitzebeständigkeit von 70° bis 200°.

3. Identifikationsschild (1) nach Anspruch 1 oder 2, wobei der Kennzeichnungsschildkörper (10) aus Aluminium geformt ist und das Identifikationsschild (1) ferner umfasst:
eine Alumit-Schicht (20), die auf der Vorderseite des Anzeigebereichs (11) vorgesehen ist, wobei der konkav gewölbte Teil (14) ausgespart ist.

4. Verfahren zur Herstellung eines Identifikationsschildes (1), das an einem Objekt anzubringen ist, umfassend:
Bereitstellen eines Anzeigebereichs (11) mit einem 2-dimensionalen Code, wobei der 2-dimensionale Code durch einen konkaven Abschnitt (14) angezeigt wird, der auf einer Vorderfläche eines aus Metall gebildeten Identifikationsplattenkörpers (10) vorgesehen ist, **dadurch gekennzeichnet, dass**
der 2-dimensionale Code einer Information entspricht, die sich auf das Objekt bezieht; und
das Verfahren eine transparente anorganisch-organische Verbundfarbe (30), die eine Wärmebeständigkeit aufweist, auf eine vordere Oberfläche des Anzeigebereichs (11) aufbringt, wo der konkave Abschnitt (14) so vorgesehen ist, dass die Farbe die vordere Oberfläche bedeckt und den konkaven Abschnitt (14) ausfüllt.

5. Verfahren zur Herstellung eines Identifikationsschildes (1) nach Anspruch 4, wobei
die anorganisch-organische Verbundfarbe hat eine Hitzebeständigkeit von 70° bis 200°.

6. Verfahren zur Herstellung eines Identifikationsschildes (1) nach Anspruch 4 oder 5, wobei
der Identifikationsschildkörper (10) aus Aluminium geformt ist und
das Verfahren ferner umfasst
Durchführen einer Alumitbearbeitung an einer vorderen Oberfläche des Identifikationsschildkörpers (10), bevor der konkave Teil (14) angebracht wird.

## Revendications

1. Une plaque d'identification (1) à fixer sur un objet, comprenant :
un corps de plaque d'identification (10) formé de métal; et
une zone d'affichage (11) ayant un code bidimensionnel, le code bidimensionnel étant affiché par une partie concave (14) de la zone d'affichage (11) prévue sur une surface frontale du corps de plaque d'identification (10),
**caractérisé en ce que**
le code bidimensionnel correspond à des informations relatives à l'objet ; et
une couche de peinture composite inorganique-organique transparente (30) résiste à la chaleur, couvre une surface frontale de la zone d'affichage (11) et
remplit la partie concave (14).

2. La plaque d'identification (1) selon la revendication 1, dans laquelle la couche de peinture composite inorganique-organique (30) a une résistance à la chaleur de 70° à 200°.

3. La plaque d'identification (1) selon la revendication 1 ou 2, dans laquelle
le corps de la plaque d'identification (10) est en aluminium, et
la plaque d'identification (1) comprend en outre
une couche d'alumite (20) prévue sur la surface frontale de la zone d'affichage (11) tout en évitant la partie concave (14).

4. Procédé de fabrication d'une plaque d'identification (1) destinée à être fixée sur un objet, comprenant :
fournir une zone d'affichage (11) ayant un code bidimensionnel, le code bidimensionnel étant affiché par une partie concave (14) prévue sur une surface frontale d'un corps de plaque d'identification (10) formé de métal, **caractérisé en ce que** :
le code bidimensionnel correspond aux informations relatives à l'objet ; et
le procédé consiste à appliquer une peinture composite inorganique-organique transparente (30) qui présente une résistance à la chaleur sur une surface frontale de la zone d'affichage (11) où la partie concave (14) est prévue de telle sorte que la peinture couvre la surface frontale et remplisse la partie concave (14).

5. Procédé de fabrication d'une plaque d'identification (1) selon la revendication 4, dans lequel
la peinture composite inorganique-organique a une résistance à la chaleur de 70° à 200°.

6. Procédé de fabrication d'une plaque d'identification (1) selon la revendication 4 ou 5, dans lequel
le corps de la plaque d'identification (10) est en aluminium, et
le procédé comprend en outre
effectuer le traitement de l'alumite sur une surface frontale du corps de la plaque d'identification (10) avant de fournir la partie concave (14).
